(19) Europäisches Patentamt
European Patent Office
Office européen des brevets

(11) Veröffentlichungsnummer: **0 012 241**
**B1**

(12) # EUROPÄISCHE PATENTSCHRIFT

(45) Veröffentlichungstag der Patentschrift: **16.02.83**

(21) Anmeldenummer: **79104564.4**

(22) Anmeldetag: **19.11.79**

(51) Int. Cl.³: **C 08 K 5/29,** C 09 B 55/00, C 08 L 67/00, D 06 P 1/13, D 01 F 1/06

(54) **Verwendung von Disazomethinverbindungen zum Masse-Färben von thermoplastischen Polyestern.**

(30) Priorität: **24.11.78 DE 2850900**

(43) Veröffentlichungstag der Anmeldung:
**25.06.80 Patentblatt 80/13**

(45) Bekanntmachung des Hinweises auf die Patenterteilung:
**16.02.83 Patentblatt 83/7**

(84) Benannte Vertragsstaaten:
**BE CH DE FR GB IT NL**

(56) Entgegenhaltungen:
**DE - A - 2 134 456**
**DE - A - 2 446 543**
**DE - A - 2 611 697**
**DE - B - 2 500 168**

(73) Patentinhaber: **HOECHST AKTIENGESELLSCHAFT**
**Postfach 80 03 20**
**D-6230 Frankfurt/Main 80 (DE)**

(72) Erfinder: **Papenfuhs, Theodor, Dr.**
**Heinrich-Bleicher-Strasse 40**
**D-6000 Frankfurt am Main 50 (DE)**
Erfinder: **Teige, Wolfgang**
**Unter den Nussbäumen 25**
**D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 012 241 B1

# Verwendung von Disazomethinverbindungen zum Masse-Färben von thermoplastischen Polyestern

Massefärbungen mit Pigmenten sind beispielsweise in Review of Progress in Coloration, Vol. 5 (1974), Seiten 86—94, beschrieben. Daraus ist bekannt, geformte Gebilde, wie z.B. Fasern aus synthetischen Polymeren, während der Synthese durch Zugabe entsprechend zubereiteter Pigmente einzufärben. So werden seit Jahren beispielsweise Fasern und Fäden aus Polyestern nach dem sogenannten Kondensationsverfahren spinngefärbt, bei dem man eine Pigment/Äthylenglykol-Dispersion vor oder nach der Umesterung des Ausgangsmaterials Dimethylterephthalat durch Äthylenglykol zum Diglykolterephthalat unter Abdestillieren des Methanols dem Umesterungsgemisch zugibt oder diese Dispersion vor oder während der Polykondensationsreaktion der Ausgangsprodukte für das Polyestermaterial der Reaktionsmasse zugibt und anschließend das so gefärbte Polymere in der Schmelze verspinnt. Dieses Verfahren hat jedoch Nachteile durch die erforderliche Dispergierung des verwendeten Pigments zu ausreichend kleinen Teilchen von etwa 2 $\mu$m sowie wegen der durch das gefärbte Material verursachten Verunreinigungen in der Kondensationsanlage, die eine vorherige Reinigung bei der nachfolgenden Verwendung eines anderen Pigmentes erforderlich machen, so daß dieses Verfahren sehr aufwendig und teuer ist. Es wird deshalb nur zum Spinnfärben von Standardfarben, wie z.B. Schwarz, Grau, Marineblau and Braun, eingesetzt.

Ferner verwendet man in der Praxis Pigmentkonzentrate (Präparationen) für die Spinnfärbung von synthetischen Polymeren, wie Polyestern und Polyamiden, die Polyäthylenwachse, Polyester und Polyamide als Trägermaterial enthalten.

Der Vorteil der letzterwähnten Arbeitsweise liegt darin, daß während des Verspinnens des Polymerisats ein rescher Wechsel der farbgebenden Komponente ohne eine zwischenzeitliche Reinigung der gesamten Anlage möglich ist, da nur der Spinnteil selbst mit dem Pigment in Berührung kommt. Nachteilig ist in den bekannten Verfahren jedoch, daß die Pigmentverteilung in den hierfür verwendeten Präparaten, die kurz vor der Spinndrüse in die zu verspinnende Polymermasse eingeführt werden, meist ungenügend ist, so daß die Filter- und Spinndüsen sehr bald verstopfen; weiterhin kann eine verminderte Faserfestigkeit des gefärbten Polymers auftreten. Es ist deshalb erforderlich, um die beim Spinnfärben von thermoplastischen Polymeren durch Pigmentagglomerate verursachten Schwierigkeiten zu vermeiden, mit Farbkörpern zu arbeiten, die im Spinnpolymer im geschmolzenen und erstarrten Zustand eine ausreichende Löslichkeit besitzen. Derartige Farbkörper finden sich z.B. in der Reihe der Küpenfarbstoffe und der Dispersionsfarbstoffe, beispielsweise aus der Anthrachinonreihe. Ihre Eignung muß anhand von Spinnversuchen ermittelt werden, wobei sie insbesondere auf ausreichende Thermostabilität (beispielsweise bei Polyestern Prüfung auf Beständigkeit bei 285°C während 20 Minuten), auf ihre Löslichkeit im Polymeren (größer als 2 Gew.-%), auf ihre coloristischen Eigenschaften, und die mit ihnen spinngefärbten Materialien selbst auf deren textilen Echtheitseigenschaften (beispielsweise auf Thermofixierechtheit bei 210°C während 60 Sekunden) ausgeprüft werden.

Es wurde nun gefunden, daß Verbindungen der allgemeinen Formel (1)

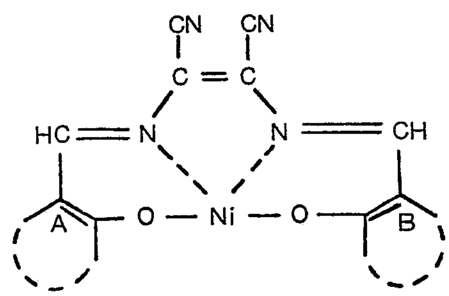

(I)

diese Nachteile nicht aufweisen und sich ausgezeichnet als farbgebende Komponenten ohne vorherige Dispergierung unter Lösen im Substrat zum Färben von wasserunlöslichen thermoplastischen, insbesondere linearen, Polyestern in der Masse eignen. Solche Polymerisate und Polykondensate sind zahlreich aus der Literatur bekannt.

In der allgemeinen Formel (1) sind die Formelreste A und B gleich oder verschieden, vorzugsweise gleich, und jedes bedeutet einen isocyclischen oder heterocyclischen aromatischen Rest, beispielsweise einen Rest aus der Benzol-, Naphthalin-, Pyridin-, Pyrimidin-, Pyrazol-, Chinolin-, Isochinolin-, Carbazol- oder Cumarin-Reihe, vorzugsweise den Rest des Benzols, Naphthalins, Pyridins, Pyrimidins, Pyrazols, Chinolins, Isochinolins, Carbazols oder Cumarins, die substituiert sein können durch Substituenten, vorzugsweise 1, 2 oder 3 Substituenten, aus der Gruppe Halogen, wie Fluor, Chlor und Brom, Alkyl von 1 bis 4 C-Atomen, wie Methyl, Äthyl, Propyl, Alkoxy von 1 bis 4 C-Atomen, wie Methoxy, Äthoxy, Propoxy und Butoxy, Acylamino einer Alkancarbonsäure von 2 bis 6 C-Atomen, insbesondere von 2 bis 4 C-Atomen, wie Actylamino oder Propionylamino, oder von einer carbocyclischen aromatischen Carbonsäure, wie Benzoylamino und durch niederes Alkoxy, niederes Alkyl,

Chlor, Brom und/oder Nitro substituiertes Benzoylamino, Cyan, Carboxy, Carbalkoxy mit 1 bis 6 C-Atomen, insbesondere 1 bis 5 C-Atomen, im Alkylrest, Carbamoyl, am N-Atom durch Alkyl von 1 bis 4 C-Atomen und/oder Phenyl oder durch 1 oder 2 Substituenten aus der Gruppe Chlor, Methyl, Äthyl, Methoxy und Äthoxy substituiertes Phenyl mono- oder disubstituiertes Carbamoyl, Hydroxy, Nitro, Phenyl und durch 1 oder 2 Substituenten aus der Gruppe Methoxy, Äthoxy, Methyl, Äthyl, Chlor, Brom, Nitro, Carboxy und Acetylamino substituiertes Phenyl.

Die vorliegende Erfindung betrifft somit die Verwendung der oben definierten Verbindungen der Formel (1) zum Färben von wasserunlöslichen thermoplastischen Polyestern in der Masse. Unter Massefärbung wird auch die Spinnfärbung verstanden.

Bei der Massefärbung kann man, bspw. analog bekannten und in der Technik üblichen Verfahrensweisen, das Farbmittel dem Polymerisat zugeben oder es aufbringen und es darin in der Schmelze lösen oder das Farbmittel vor oder während der Polymerisationsreaktion zur Herstellung des wasserunlöslichen thermoplastischen Polyesters der Reaktionsmasse zusetzen und darin lösen.

Die vorliegende Erfindung betrifft insbesondere die Verwendung der Verbindungen der Formel (1) in der Spinnfärbung von Polyesterfasermaterialien.

Des weiteren betrifft die vorliegende Erfindung in der Masse gefärbte wasserunlösliche thermoplastische Polyester, die als Farbmittel eine Verbindung der Formel (1) gelöst enthalten.

Die erfindungsgemäße Verwendung der Verbindungen der Formel (1) stellt sich besonders bevorzugt für diejenigen Verbindungen dar, in welchen A und B gleich oder verschieden sind, vorzugsweise gleich, und jedes einen Benzolkern oder einen Naphthalinkern bedeutet und jedes durch 1 oder 2 Substituenten aus der Gruppe Methyl, Äthyl, Methoxy, Äthoxy, Hydroxy, Brom, Chlor, Carboxy, Acetylamino, Propionylamino, Benzoylamino, Carbomethoxy, Carbäthoxy, Carbamoyl, N-Phenyl-carbamoyl und N-(Methylphenyl)-carbamoyl substituiert sein kann, oder ein Hydroxychinolinrest ist oder ein 1-Phenyl-3-methyl- oder 1-Phenyl-3-carboxy-pyrazol-Rest ist, die im Phenylrest durch 1 oder 2 Substituenten aus der Gruppe Carboxy, Nitro, Methyl, Äthyl, Methoxy, Äthoxy, Chlor, Brom und Acetylamino substituiert sein können.

Weiterhin bevorzugt ist die Verwendung derjenigen Verbindungen, in Welchen A und B gleich oder verschieden sind und jedes einen Benzol- oder Naphthalinkern bedeutet und durch eine Methyl-, Methoxy-, Carboxy-, Acetylamino- oder Carbäthoxygruppe oder ein Chlor- oder Bromatom substituiert sein kann.

Die Verbindungen der formel (1) können nach der in der deutschen Offenleungsschrift Nr. 26 11 697 beschriebenen Verfahrensweise hergestellt werden.

Polyesterpolymere, die in erfindungsgemäßer Weise in der Masse gefärbt werden können, sind beispielsweise lineare Polymere aus aromatischen Dicarbonsäuren, wie bspw. von Therephthalsäure, mit aliphatischen Dihydroxyverbindungen, wie Äthylenglykol, 1,4-Dihydroxybutan, 1,4-Dimethylolcyclohexan, somit bspw. Poly-butylenterephthalat, Poly-(1,4-dimethylol-cyclohexan-terephthalat), insbesonders aber Polyäthylenglykolterephthalat, ebenso aber auch das Poly-$\varepsilon$-caprolacton.

Die Massefärbung wird in bekannter Weise durchgführt. So kann man bei der vorliegenden Erfindung zur Herstellung heller Farbtöne davon ausgehen, daß man das ungefärbte Polymer in Form eines Granulats oder in Form von Chips zuerst mit einer Verbindung der Formel (1) vermischt (sogenanntes "Panierverfahren") und diese Mischung dann erhitzt und aufschmilzt und die Verbindung der Formel (1) in dem Polymer löst. Dieses allgemein bekannte Panierverfahren läßt sich aber, wie üblich, nur zur Herstellung hellgefärbter Massen einsetzen, da die geringe Oberfläche des verwendeten Granulats bzw. der Chips keine höheren Konzentrationen an Farbmittel zuläßt, anderenfalls es zur Entmischung und zum Stauben bei der Handhabung des panierten Granulats kommt. — Nicht nur helle, sondern auch sehr tiefe Färbungen des Polymers in der Masse lassen sich erreichen, wenn man das Farbmittel, d.h. die Verbindung der Formel (1), in Form eines grieß- oder granulatförmigen Konzentrats (Präparats) dem zu färbenden Polyester, beispielsweise dem Granulat oder der Schmelze des Polyesters, zugibt. Diese Farbmittelkonzentrate, sog. Master-Batches, bestehen aus der Verbindung der Formel (1) und einem geeigneten Trägermaterial; der Gehalt der Verbindung der Formel (1) in diesem Trägermaterial kann bis zu über 50 Gew.-% betragen. Geeignete, als synthetische Umhüllungspolymere für die Verbindung der Formel (1) dienende thermoplastische Trägermaterialien sind in bekannter Weise hier Polyalkylenglykole und insbesondere aliphatische Polyester mit einem Schmelzpunkt im Bereich von etwa 60 bis 120°C, so beispielsweise aliphatische Polyester vom Typ der Poly-$\varepsilon$-caprolactone mit einem Molekulargewicht zwischen 1000 und 50 000, des weiteren lineare aliphatische Ester von linearen aliphatischen Dicarbonsäuren mit 6 bis 12 C-Atomen und einem aliphatischen und/oder cycloaliphatischen Glykol mit 2 bis 6 C-Atomen, so beispielsweise Poly-(äthylenglykol-adipat) und Poly-(äthylenglykol-sebacat), Poly-(äthylenglykol-decandicarboxylat) und Poly-(cyclohexandioladipat) mit einem Molekulargewicht zwischen 2000 und 15 000. Solche Umhüllungspolymere bzw. deren Herstellung sind in der Literatur beschrieben. Die Herstellung solcher Farbstoffkonzentrate aus einem Trägermaterial (Umhüllungspolymer) mit der Verbindung der Formel (1) kann in analoger Weise, wie aus der Literatur bekannt, beispielsweise mit Hilfe eines Kneters erfolgen, in welchem man die Verbindung der Formel (1) bei einer Temperatur, die dem aufgeschmolzenen Trägermaterial eine ausreichend hohe Viskosität verleiht, mit dem Trägermaterial umhüllt bzw. bei Anwendung geringer Konzentrationen an der Verbindung der Formel (1) diese darin löst. Diese Master-Batches stauben nicht und

lassen sich leicht zur Einfärbung der Polyester in den gewünschten Farbtönen einsetzen.

Des weiteren ist es erfindungsgemäß möglich, thermoplastische Polyester schon während deren Herstellung durch Polymerisation in der Masse mittels einer Verbindung der Formel (1) zu färben. Hierbei gibt man die Verbindung der Formel (1) entweder selbst oder in Form eines oben erwähnten Master-Batch der Polymerisationsmasse vor oder während des Polymerisationvorganges zu, vorzugsweise in Form einer Dispersion in dem Ausgangsglykol, beispielsweise Äthylenglykol. Die Verbindung der Formel (1) löst sich während des Polymerisationsprozesses in dem sich bildenden Polymeren. Diese Verfahrensweise wird analog bekannten Polymerisationsreaktionen durchgeführt, bei welchem ein Farbmittel der Reaktionsmasse zugesetzt wird.

Die nach einem der obigen Verfahrensweisen in der Masse gefärbten Polyester lassen sich anschließend nach üblichen Verfahren verformen und weiterverarbeiten, so beispielsweise im Spritzguß, in Spinnverfahren oder in der Folienherstellung.

Besonders vorteilhaft ist die Verwendung der Verbindung der Formel (1) in Form des Farbstoffkonzentrats (Master-Batch), das also solches oder in geschmolzener Form der Schmelze des zu färbenden Polyesters zugegeben wird. Mit ihm läßt sich die Verbindung der Formel (1) leicht dosieren, und es lassen hierdurch in einfacher und genauer Weise bestimmte Farbnuancen und -tiefen einstellen.

Bei der erfindungsgemäßen Verwendung der Verbindungen der Formel (1) können die zu färbenden Polyester auch Mattierungsmittel, wie beispielsweise Titandioxid, enthalten oder solche diesen zugesetzt werden.

Bei der erfindungsgemäßen Färbung der Polyester werden die Verbindungen der Formel (1) naturgemäß in solchen Mengen eingesetzt, die für die gewünschte Farbtiefe erforderlich sind. Im allgemeinen erfolgt in der Praxis die Massefärbung gemäß der vorliegenden Erfindung mit einer Menge von 0,05 bis 3 Gew.-% an der Verbindung der Formel (1), bezogen auf das Gewicht des gefärbten thermoplastischen Materials.

Da die Verbindungen der Formel (1) sich in den Polyestern sowohl in deren geschmolzenem als auch in deren festem Zustand molekulardispers lösen und somit nicht als feste Partikel in der gefärbten Masse enthalten sind, zeigen insbesondere die mit der Verbindung der Formel (1) massegefärbten Fäden eine praktisch unverändert hohe Faserfestigkeit und gute Verstreckbarkeit; insbesondere bei dem Spinnprozeß selbst können keine Verstopfungen der Düsen oder Filter und kein Abrieb in den Spinndüsen selbst auftreten. Die Verbindungen der Formel (1) müssen dementsprechend auch vor ihrer Verwendung nicht gesondert dispergiert werden, so daß keine Verarbeitungsschwierigkeiten mit den Verbindungen der Formel (1) auftreten.

Eine besondere Ausgestaltung der vorliegenden Erfindung ist demnach die Verwendung der Verbindungen der Formel (1) in der Spinnfärbung von Polyestern, wobei man beispielsweise ein Polyesterpolymerisat in der Schmelze mit einer Verbindung der Formel (1) färbt und anschließend in üblicher Weise verspinnt. Analog bekannten Verfahrensweisen wird hierbei beispielsweise beim Verspinnen auf Extrusions-Spinnanlagen die Verbindung der Formel (1), beispielsweise über eine Seitenschnecke, vorzugsweise in Form des oben erwähnten Konzentrats in geschmolzenem Zustand, unmittelbar in die Schmelze des Spinnpolymers eindosiert, wobei eine homogene Vermischung unter Lösung der Verbindung der Formel (1) erfolgt (ebenso kann man beim Verspinnen auf Rostspinnanlagenverfahren). Besonders vorteilhaft läßt sich die Färbung der Masse in der Spinnfärbung unter Verwendung des erwähnten Konzentrats (Master-Batches) der Verbindung der Formel (1) durchführen, bei welchem man das Konzentrat in geschmolzenem Zustand der geschmolzenen Masse des Polyesters direkt vor der Spinndüse zugibt. Für die Massefärbung mit den Verbindungen der Formel (1) kann deshalb besonders vorteilhaft in den Spinnverfahren nach dem Injektionsverfahren gearbeitet werden. Durch diese Verfahrensweise lassen sich Verunreinigungen der Spinnanlage durch das Farbmittel vermeiden, und es können nach dieser Verfahrensweise ohne Mühe andere Einfärbungen des zu verspinnenden Polyesters, sei es in Farbton oder Farbtiefe, durch Wechsel der Verbindungen der Formel (1) selbst als Farbmittel bzw. durch Abänderung von deren Dosierungshöhe vorgenommen werden.

Die erfindungsgemäße Verwendung der Verbindungen der Formel (1) führt zu farbstarken brillanten roten, violetten bis braunen Färbungen, die eine sehr gute Licht- und Reibechtheit sowie eine vorzügliche Thermofixierechtheit besitzen. Insbesondere zeigen die Verbindungen der Formel (1) in überraschender Weise eine sehr hohe Löslichkeit in den wasserunlöslichen thermoplastischen Polymerisaten und Polykondensaten von bis zu über 3 Gew.-%, die selbst die bisher in der Technik erwünschten Konzentrationshöchstgrenzen für die praktische Verwendung übertreffen. Insbesondere ist die überraschend hervorragende Thermostabilität der bei der erfindungsgemäßen Verwendung in der Masse gelöst befindlichen Verbindungen der Formel (1) hervorzuheben, die selbst eine Verarbeitung der gefärbten Masse bei Temperaturen von etwa 300°C ermöglichen; somit eignen sich die Verbindungen der formel (1) ausgezeichnet für die Technik der Schmelzspinnfärbung. Darüberhinaus zeigen die Verbindungen der Formel (1) bei der erfindungsgemäßen Verwendung auch den Vorteil, daß sie die Viskosität der Spinnschmelzen auch bei farbtiefen Einfärbungen nicht beeinflussen und die Polyester und die daraus geformten Gebilde, so auch die Fäden und Fasern, in ihren Eigenschaften, wie beispielsweise Festigkeit und Dehnfähigkeit, nicht vermindern. So ergibt die erfindungsgemäße Verwendung der Verbindungen der Formel (1) in der Massefärbung auch gefärbte Materialien, die in überraschender Weise, insbesondere in Form dünnschichtiger Gebilde, wie Fasern, Fäden, Folien, höchsten Anforderungen an Farbstärke, Licht- und Wetterechtheit und sogar an der ansonsten kritischen Thermofixierechtheit genügen; insbesondere ist für die gefärbten Polyester die hohe Thermofixierechtheit trotz der guten Polymerlöslichkeit der Verbindungen der Formel (1) überraschend.

Die nachstehenden Beispiele dienen zur Erläuterung der Erfindung. Die Teile sind Gewichtsteile, die Angaben in Prozent sind Gewichtsprozente, sofern nicht anders vermerkt.

## Beispiel 1

10 Teile der Verbindung der Formel

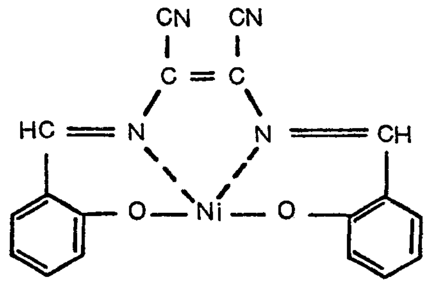

werden mit 90 Teilen Äthylenglykol mittels eines Schnellrührers 30 Minuten lang angeteigt. 5 Teile dieser Paste werden mit 95 Teilen Bis-(β-hydroxyäthyl)-terephthalat vermischt und 6 Stunden lang bei einer Temperatur zwischen 270 und 280°C im Hochvakuum erhitzt, wobei die Kondensation zum Polyester erfolgt. Die so erhaltene gefärbte Schmelze wird abgekühlt und in üblicher Weise granuliert.

Die gefärbte Polyestermasse kann zu geformten Gebilden verschiedenster Art nach den üblichen Verfahren, wie beispielsweise im Spritzguß oder im Schmelzspinnverfahren, weiterverarbeitet werden. Man erhält insbesondere bei der Verarbeitung zu Fäden brillante, tiefe, rotstichig braune Färbungen, die eine sehr gute Thermofixier- und überragende Lichtechtheit aufweisen.

## Beispiele 2 bis 4

Verfährt man wie in Beispiel 1 beschrieben, verwendet jedoch anstelle der dort angegebenen Disazomethinverbindung eine in der nachstehenden Tabelle genannte Disazomethinverbindung entsprechend der allgemeinen Formel (1):

| Bsp. | A | B |
|---|---|---|
| 2 | 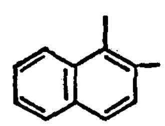 | 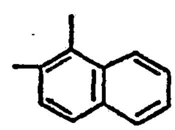 |
| 3 | 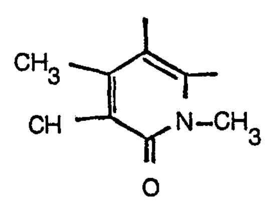 | 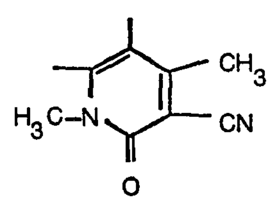 |
| 4 | 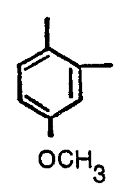 | 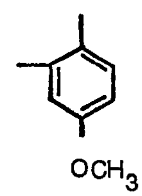 |

so erhält man ebenfalls braune, farbstarke Färbungen mit sehr guten Echtheitseigenschaften.

Beispiel 5

1 Teil einer Verbindung entsprechend der Formel

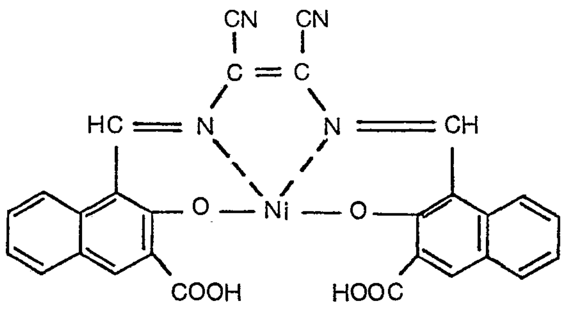

wird mit 99 Teilen eines Granulates aus Poly-1,4-dimethylolcyclohexan-terephthalat gemischt und auf eine Temperatur von 270 bis 290°C aufgeschmolzen, wobei sich eine homogene Lösung der Disazomethinverbindung in der Schmelze bildet. Diese gefärbte Schmelze wird analog bekannten und üblichen Verfahrensweisen der Schmelzspinntechnik zu Polyesterfäden versponnen, die eine brillante, rotviolette Nuance zeigen und sich durch eine sehr gute Thermofixier und Lichtechtheit auszeichnen.

Beispiele 6 bis 8

Verfährt man wie in Beispiel 5 beschrieben, verwendet jedoch anstelle der dort beschriebenen Disazomethinverbindung eine in der nachfolgenden Tabelle angegebene Disazomethinverbindung entsprechend der allgemeinen Formel (1):

| Bsp. | A | B |
|---|---|---|
| 6 | 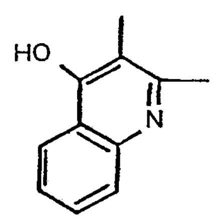 | 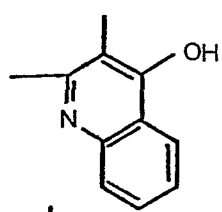 |
| 7 | 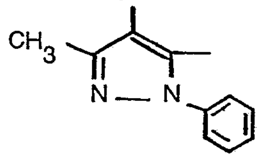 | 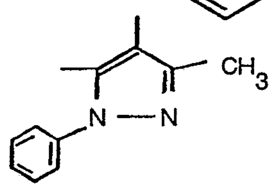 |
| 8 | 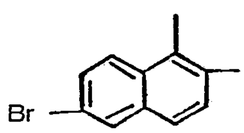 | 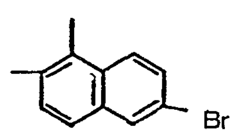 |

so erhält man Fäden in einem lebhaften braunen Farbton mit seht guten anwendungstechnischen und Echtheitseigenschaften.

Beispiel 9

2,5 Teile einer Präparation von 40 Teilen der Verbindung der Formel

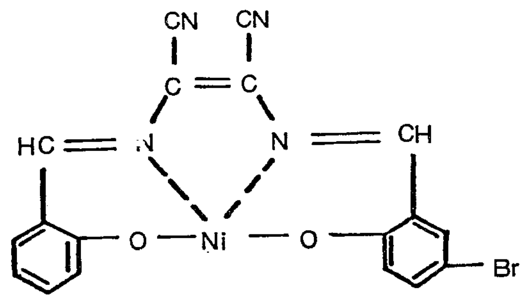

und 60 Teilen eines Tragermaterials als Umhüllungspolymer, das beispielsweise ein Poly-ε-caprolacton, Poly-(äthylenglykol-adipat), Poly-(äthylenglykol-sebacat), Poly-(äthylen-glykol-decandicarboxylat), Poly-(cyclohexandiol-adipat) oder iso-Phthal- oder Terephthalsäurecopolyester mit Äthylenglykol und Neopentglykol ist, werden mit 97,5 Teilen Poly-äthylenglykolterephthalat gemischt und nach einem für Polyestermaterialien üblichen Schmelzspinnverfahren zu Filamentgarn versponnen. Das so erhaltene Fadenmaterial zeichnet sich durch einen brillanten, rotvioletten Farbton mit ausgezeichneten Echtheitseigenschaften aus.

Das oben verwendete Präparat kann beispielsweise folgendermaßen hergestellt werden: Das Farbmittel und das Trägermaterial werden miteinander vermischt, sodann zusammen aufgeschmolzen, extrudiert, über einen Doppelschneckenextruder ausgetragen und anschließend granuliert.

Beispiele 10 bis 28

Verfährt man wie in einem der obengenannten Beispiele 1, 5 oder 9 beschrieben, verwendet jedoch anstelle der dort beschriebenen Disazomethinverbindung eine in der nachfolgenden Tabelle angegebene Disazomethinverbindung entsprechend der allgemeinen Formel (1), so erhält man eine gefärbte Polymermasse bzw. gefärbte Fäden in den in der Tabelle angegebenen Farbtönen mit ebenso guten anwendungstechnischen Eigenschaften und Echtheiten:

| Bsp. | A | B | Farbiton |
|---|---|---|---|
| 10 | 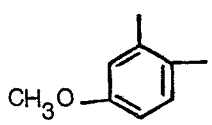 | 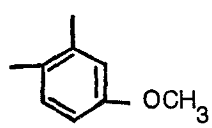 | bordo |
| 11 | dito | 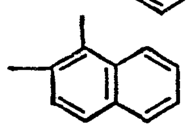 | violett |
| 12 | dito | 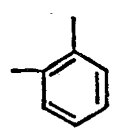 | violett |

| Bsp. | A | B | Farbiton |
|---|---|---|---|
| 13 | 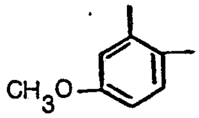 | 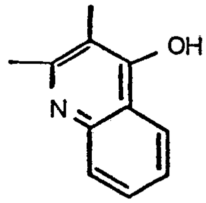 | blau-violett |
| 14 | 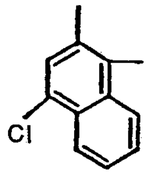 | 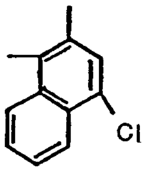 | tiefbraun |
| 15 | dito | 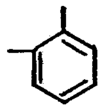 | rotbraun |
| 16 | dito | 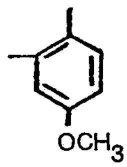 | braunviolett |
| 17 | dito | 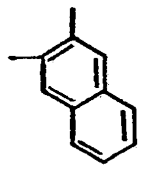 | braun |
| 18 | dito | 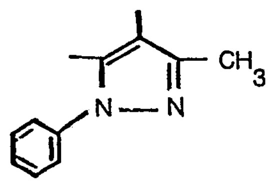 | blauviolett |
| 19 | 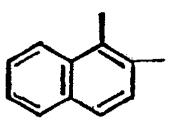 | 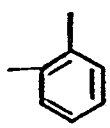 | rotviolett |
| 20 | dito | 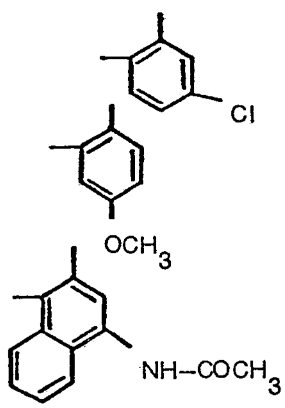 | violett |
| 21 | dito | | rotviolett |
| 22 | 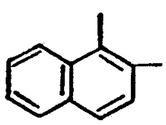 | | rotviolett |

| Bsp. | A | B | Farbiton |
|---|---|---|---|
| 23 | 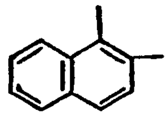 | 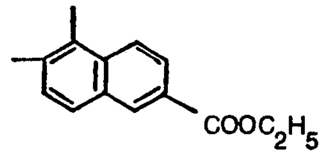 | dunkelrot |
| 24 | dito | 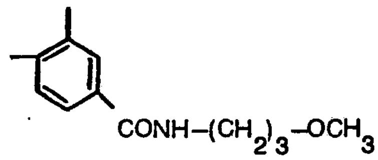 | dunkelrot |
| 25 | dito | 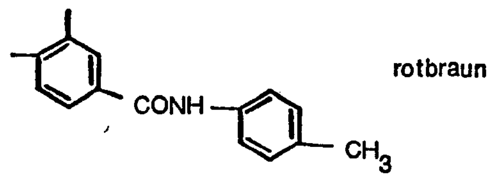 | rotbraun |
| 26 | 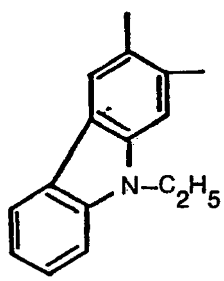 | 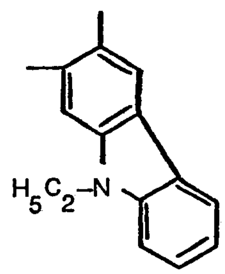 | dunkelblau |
| 27 | 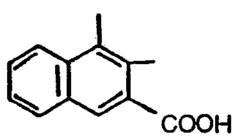 | 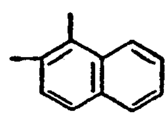 | blaust. rot |
| 28 | 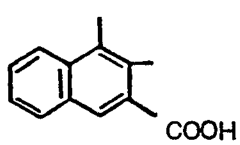 | 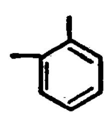 | blaust. rot |

## Patentansprüche

1. Verwendung von Disazomethinverbindungen der allgemeinen Formel (1)

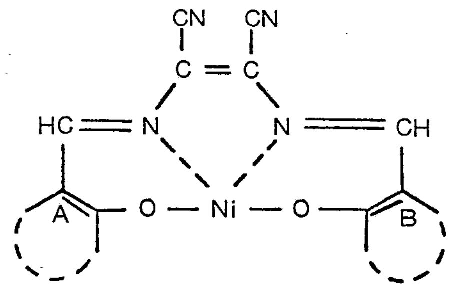

(1)

in welcher A und B gleich oder verschieden sind und jedes einen isocyclischen oder heterocyclischen aromatischen Rest bedeutet, zum Färben von thermoplastischen Polyestern in der Masse.

2. Verwendung der Disazomethinverbindungen gemäß Anspruch 1 in der Spinnfärbung von thermoplastischen Polyestern.

3. Verwendung nach Anspruch 1 oder 2, bei welcher die Disazomethinverbindung eine Verbindung der allgemeinen Formel (1) ist, in welcher A und B gleich oder verschieden sind und jedes einen Benzolkern oder einen Naphthalinkern bedeutet, die durch 1 oder 2 Substituenten aus der Gruppe Methyl, Äthyl, Methoxy, Äthoxy, Hydroxy, Brom, Chlor, Carboxy, Acetylamino, Propionylamino, Benzoylamino, Carbomethoxy, Carbäthoxy, Carbamoyl, N-Phenyl-carbamoyl und N-(Methylphenyl)-carbamoyl substituiert sein können, oder ein Hydroxychinolinrest ist oder ein 1-Phenyl-3-methyl- oder 1-Phenyl-3-carboxy-pyrazol-Rest ist, die im Phenylrest durch 1 oder 2 Substituenten aus der Gruppe Carboxy, Nitro, Methyl, Äthyl, Methoxy, Chlor, Brom und Acetylamino substituiert sein können.

4. Verwendung nach Anspruch 1 oder 2, bei welcher die Disazomethinverbindung eine Verbindung der allgemeinen Formel (1) ist, in welcher A und B gleich oder verschieden sind und jedes einen Benzolkern oder einen Naphthalinkern bedeutet, die durch Methoxy, Methyl, Chlor, Brom, Acetylamino, Carboxy oder Carboäthoxy substituiert sein können.

5. Verwendung nach Anspruch 1 oder 2, bei welcher die Disazomethinverbindung die Verbindung der Formel

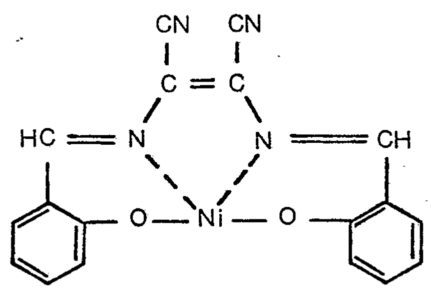

ist.

6. Verwendung nach Anspruch 1 oder 2, bei welcher die Disazomethinverbindung die Verbindung der Formel

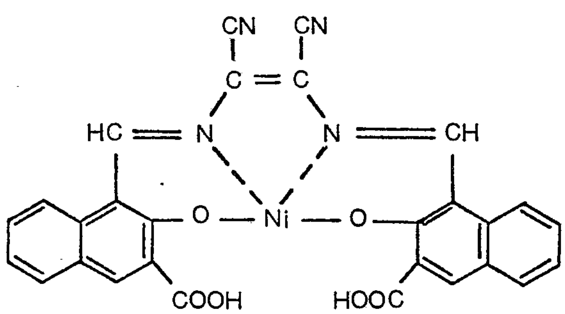

ist.

7. Verwendung nach Anspruch 1 oder 2, bei welcher die Disazomethinverbindung die Verbindung der Formel

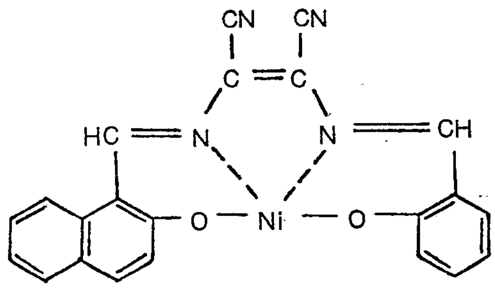

ist.

8. Verwendung nach Anspruch 1 oder 2, bei welcher die Disazomethinverbindung die Verbindung der Formel

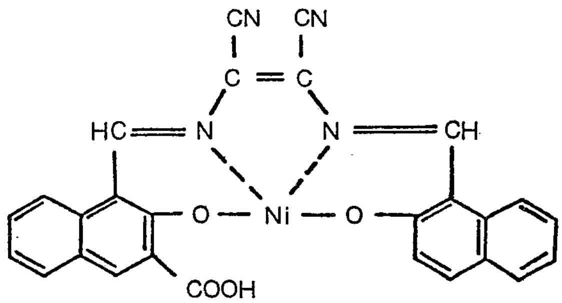

ist.

9. Verwendung nach Anspruch 1 oder 2, bei welcher die Disazomethinverbindung die Verbindung der Formel

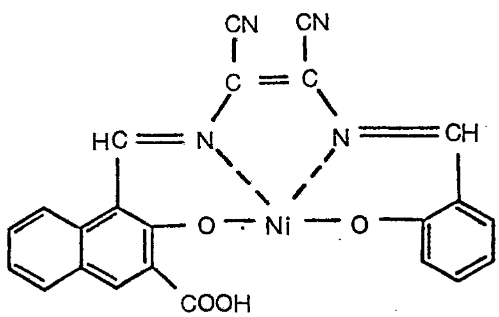

ist.

**Claims**

1. Use of disazomethine compounds of the general formula (1)

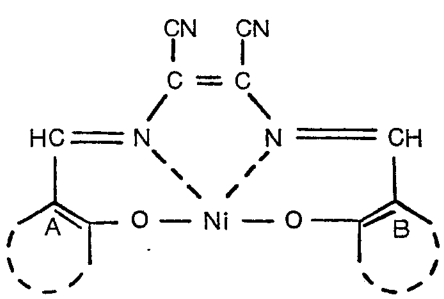

(1)

in which A and B have the same meaning or are different from each other and each is an isocyclic or heterocyclic aromatic residue, for coloring of thermoplastic polyesters in the mass.

2. Use of the disazomethine compounds according to Claim 1 in the spin-dyeing of the thermoplastic polyesters.

3. Use according to claim 1 or 2, wherein the disazomethine compound is a compound of the general formula (1) in which A and B have the same meaning or are different from each other and each means a benzene nucleus or a naphthalene nucleus, the benzene and naphthalene nuclei may be substituted by one or two substituents selected from the group consisting of methyl, ethyl, methoxy, ethoxy, hydroxy, bromine, chlorine, carboxy, acetylamino, propionylamino, benzoylamino, carbomethoxy, carbethoxy, carbamoyl, N-phenyl-carbamoyl and N-(methylphenyl)-carbamoyl, or each is a hydroxyquinoline radical or is a 1-phenyl-3-methyl- or 1-phenyl-3-carboxy-pyrazol-radical, the phenyl residue of which may be substituted by 1 or 2 substituents selected from the group consisting of carboxy, nitro, methyl, ethyl, methoxy, ethoxy, chlorine, bromine and acetylamino.

4. Use according to claim 1 or 2, wherein the disazomethine compound is a compound of the general formula (1) in which A and B have the same meaning or are different to each other and each means a benzene nucleus or a naphthalene nucleus, and these nuclei may be substituted by methoxy, methyl, chlorine, bromine, acetylamino, carboxy or carbethoxy.

5. Use according to claim 1 or 2, wherein the disazomethine compound is a compound of the formula

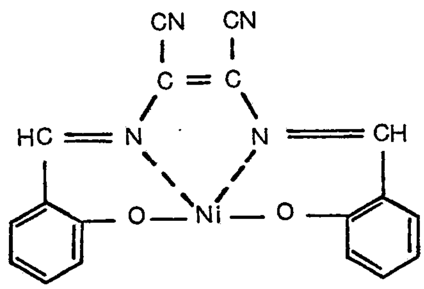

6. Use according to claim 1 or 2, wherein the disazomethine compound is a compound of the formula

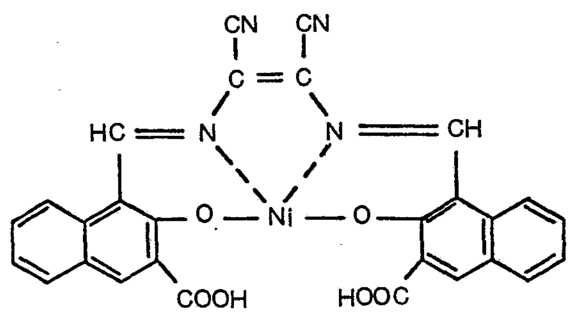

7. Use according to claim 1 or 2, wherein the disazomethine compound is a compound of the formula

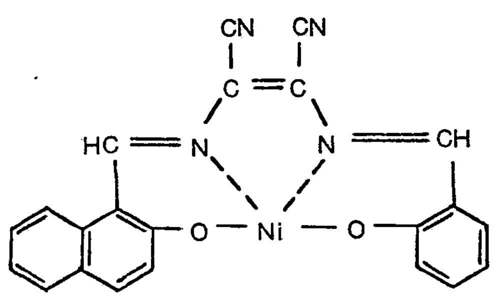

8. Use according to claim 1 or 2, wherein the disazomethine compound is a compound of the formula

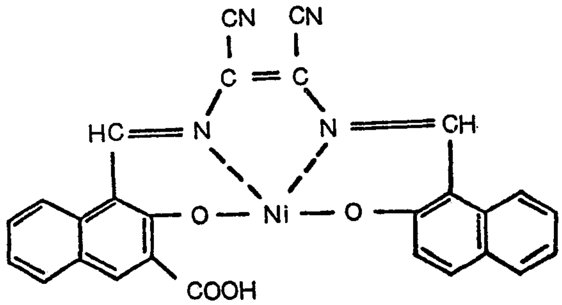

9. Use according to claim 1 or 2, wherein the disazomethine compound is a compound of the formula

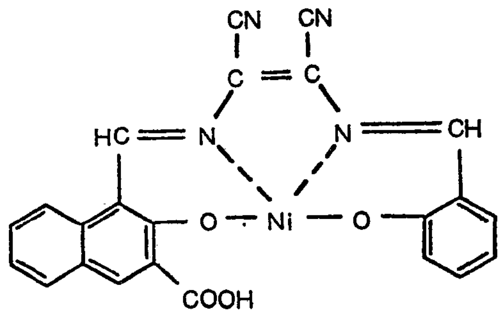

**Revendications**

1. Utilisation de composés bis-azométhiniques de formule générale (I)

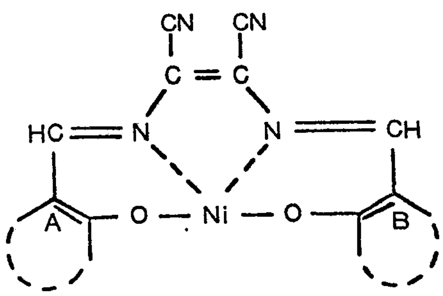

(1)

(dans laquelle A et B sont identiques ou différents et représentent chacun un reste aromatique isocyclique ou hétérocyclique) pour teindre des polyesters thermoplastiques dans la masse.

2. Utilisation des composés bis-azométhiniques selon la revendication 1, dans la teinture en cours de filage de polyesters thermoplastiques.

3. Utilisation selon la revendication 1 ou 2, caractérisée en ce que le composé bis-azométhinique est un composé de formule générale (I) dans laquelle A et B sont identiques ou différents et représentent chacun un noyau benzénique ou un noyau naphtalénique pouvant être substitué par un ou deux substituants de l'ensemble formé par un groupe méthyle, éthyle, méthoxy, éthoxy, hydroxyle, brome, chlore, carboxy, acétylamino, propionylamino, benzoylamino, carbométhoxy, carbéthoxy, carbamoyle, N-phényl-carbamoyle et N-(méthylphényl)-carbamoyle, ou est un reste d'hydroxy-quinoléine ou un reste de phényl-1 méthyle-3-pyrazole ou de phényle-1 carboxy-3-pyrazole pouvant être substitué dans le reste phényle par un ou deux substituants choisis dans l'ensemble formé par un groupe carboxy, nitro, méthyle, éthyle, méthoxy, chlore, brome et acétylamino.

4. Utilisation selon la revendication 1 ou 2, caractérisée en ce que le composé bis-azométhinique est un composé de formule générale (I), dans laquelle A et B sont identiques ou différents et représentent chacun un noyau benzénique ou un noyau naphtalénique pouvant être substitué par un groupe méthoxy, méthyle, chlore, brome, acétylamino, carboxy ou carbéthoxy.

5. Utilisation selon la revendication 1 ou 2, caractérisée en ce que le composé bis-azométhinique est le composé de formule:

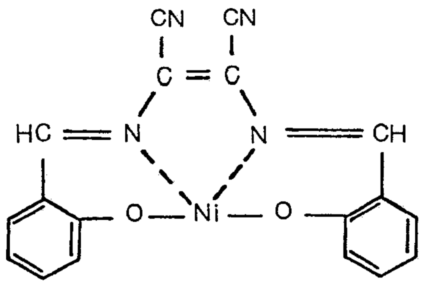

6. Utilisation selon la revendication 1 ou 2, caractérisée en ce que le composé bis-azométhinique est le composé de formule:

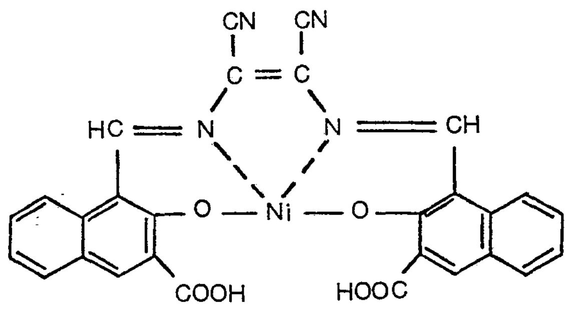

7. Utilisation selon la revendication 1 ou 2, caractérisée en ce que le composé bis-azométhinique est le composé de formule:

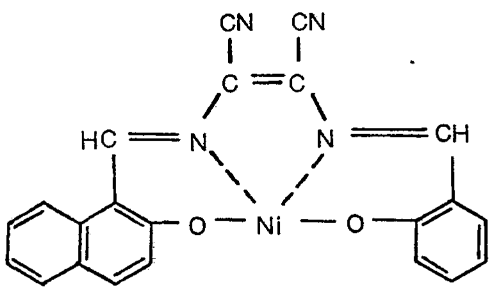

8. Utilisation selon la revendication 1 ou 2, caractérisée en ce que le composé bis-azométhinique est le composé:

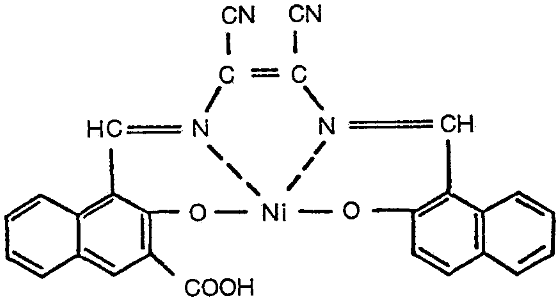

9. Utilisation selon la revendication 1 ou 2, caractérisée en ce que le composé bis-azométhinique est le composé: